Europäisches Patentamt

European Patent Office

Office européen des brevets

(11) Publication number: **0 513 769 A2**

## EUROPEAN PATENT APPLICATION

(21) Application number: **92108095.8**

(22) Date of filing: **13.05.92**

(51) Int. Cl.5: **F16D 69/02**, C09K 3/14

(30) Priority: **14.05.91 JP 138415/91**

(43) Date of publication of application:
**19.11.92 Bulletin 92/47**

(84) Designated Contracting States:
**DE FR GB**

(71) Applicant: **AKEBONO BRAKE INDUSTRY CO., LTD.**
**19-5, Nihonbashi Koami-cho**
**Chuo-ku Tokyo 103(JP)**

(72) Inventor: **Komatsu, Masahito**
**455, Hanyu**
**Hanyu-shi, Saitama(JP)**

(74) Representative: **TER MEER - MÜLLER - STEINMEISTER & PARTNER**
**Mauerkircherstrasse 45**
**W-8000 München 80(DE)**

(54) **Composite friction material.**

(57) A composite friction material containing hollow glass powder with closed pore. Preferable glass powder has a pressure-withstanding strength of 7 to 100 kg/cm$^2$, specific gravity of particle of 0.1 to 0.8 and particle diameter of 5 to 500 um. Such glass powder is used in amount of 5 to 50 wt. %. It provides drastic lightening in weight, good strength and excellent judder resistance and noise property.

EP 0 513 769 A2

The present invention relates to a dry friction materials used for brake and clutch for cars and industrial machinery.

Traditionally, such friction materials are molded densely in general for securing a certain extent of strength. Hence, the lightening in weight has been difficult and further there has been a tendency of poor judder resistance and noise property because of high hardness and low porosity

As a result of extensive investigations in view of this situation, a composite friction material being capable of epoch-making lightening in weight and having excellent judder resistance and noise property has been developed by the invention.

The inventive composite friction material is characterized by containing hollow glass powder with closed pore.

By using hollow glass powder with closed pore in this way, pores in friction material can be secured, thus allowing the compatibility between lightening in weight and strength. Besides, while there were examples used balloon-like silica as in Japanese Unexamined Patent Publication No. Sho 58-77937 and No. Sho 59-81340 and an example used open type hollow glass as in Japanese Unexamined Patent Publication No. Sho 63-195438 in the past for securing the pores, the strength of these articles is very low being around 20 to 30 % of the inventive article, and, since the pores collapse by the molding pressure when molding the friction material, they cannot be secured not allowing the lightening in weight.

The desirable characteristics of said hollow glass powder with closed pore are as follows: The specific gravity of particle is 0.1 to 0.8, more preferably 0.3 to 0.6, the pressure-withstanding strength is 7 to 1100 kg/cm$^2$, more preferably 140 to 420 kg/cm$^2$, and the particle size is 5 to 500 $\mu$m, more preferably 5 to 200 $\mu$m.

And, with the friction material used such hollow glass powder, the porosity becomes 15 to 40 % resulting in good judder resistance and noise property.

Preferable formulating compositions of the inventive composite friction material shown below:

| Formulation rate by weight | |
|---|---|
| Glass roving | 20 - 50 |
| Hollow glass powder | 5 - 50 |
| Calcium carbonate | 0 - 20 |
| Brass wire | 0 - 5 |
| Phenol resin | 5 - 15 |
| Rubber component | 30 - 50 |

In following, examples of the invention will be illustrated.

Example

The inventive friction materials 1 and 2 and a comparative friction material having formulating compositions shown in Table 1 were produced according to the usual method. Namely, a clutch facing string was made with each formulating composition and wound in the shape of circular ring with a fixed size for preliminary molding, which was then molded in a metal mold at a temperature of 170 °C and pressure of 100 kg/cm$^2$. Thereafter, the heat treatment was further performed for 4 hours at a temperature of 180 °C to obtain a ring shaped clutch facing.

Each of said clutch facings was machined to 200 mm outer diameter x 130 mm inner diameter x 3.5 mm thickness and the frictional characteristics and judder property were examined, the results of which are shown in Table 2. Besides, for the frictional characteristics, bench test was performed and the comparison was made through the friction coefficient on fade (fade $\mu$), friction coefficient at stable period (stable period $\mu$) and existence of noise generation (Braking test under test conditions of inertial force of 0.16 kgfms$^2$ and number of revolutions of 1500 rpm. Temperature of mating material: 200 °C). Moreover, the judder property was compared using the measured values by accelerometer mounted in front and behind the car body of a commercial car.

Table 1

|  | Inventive friction material 1 | Inventive friction material 2 | Comparative friction material |
|---|---|---|---|
| Glass roving | 30 | 30 | 30 |
| Hollow glass powder | 10 | 20 | - |
| Calcium carbonate | 10 | - | 20 |
| Brass wire | 3 | 3 | 3 |
| Phenol resin | 10 | 10 | 10 |
| Rubber component | 37 | 37 | 37 |

Table 2

|  | Inventive friction material 1 | Inventive friction material 2 | Comparative friction material |
|---|---|---|---|
| Fade $\mu$ | 0.35 | 0.39 | 0.28 |
| Stable period $\mu$ | 0.34 | 0.45 | 0.45 |
| Existence of noise generation | No | No | Yes |
| Rotation intensity at 200 °C (rpm) | 14000 | 14500 | 13000 |
| Judder property (G) | 0.06 | 0.05 | 0.11 |
| Density (g/cm$^3$) | 1.38 | 1.23 | 1.80 |

As described, in accordance with the invention, conspicuous effects are exerted industrially in that both the strength of friction material and the lightening in weight thereof are satisfied simultaneously and the noise property and judder resistance are excellent, and others.

**Claims**

1. A composite friction material containing hollow glass powder with closed pore.

2. The composite friction material of Claim 1, wherein the specific gravity of particle of said hollow glass powder is 0.1 to 0.8, the pressure-withstanding strength is 7 to 1100 kg/cm$^2$, and the particle size is 5 to 500 $\mu$m.

3. The composite friction material of Claim 1, wherein said hollow glass powder is contained in amount of 5 to 50 wt. %.

4. The composite friction material of Claim 1, wherein the porosity of composite friction material containing said hollow glass powder is 15 to 40 %.

5. A composite friction material containing following components (% by weight): 20 - 50 of glass roving, 5 - 50 of hollow glass powder, 0 - 20 of calcium carbonate, 0 - 5 of brass wire, 5 - 15 of phenol resin and 30 - 50 of rubber component.